# EUROPÄISCHE PATENTSCHRIFT

(11) **EP 0 442 290 B1**
(45) Veröffentlichungstag und Bekanntmachung des Hinweises auf die Patenterteilung: **11.08.1993**
(21) Anmeldenummer: 91100729.2
(22) Anmeldetag: 22.01.1991
(51) Int. Cl.: A01B 29/06

(54) **Stützwalze**
Support roller
Rouleau de soutien

(30) Priorität: 13.02.1990 DE 4004276
(43) Veröffentlichungstag der Anmeldung: 21.08.1991
(73) Patentinhaber: Amazonen-Werke H. Dreyer GmbH & Co. KG, D-49205 Hasbergen (DE)
(72) Erfinder: Pfisterer, Thomas, W-6670 St. Ingbert (DE)

(56) Entgegenhaltungen:
- EP-A- 0 255 751
- EP-A- 0 345 899
- DE-U- 8 519 861
- US-A- 2 079 979
- US-A- 2 261 893

## Beschreibung

Die Erfindung betrifft eine Stützwalze gemäß des Oberbegriffes des Patentanspruches 1,

Derartige Stützwalzen sind beispielsweise durch die europäische Offenlegungsschrift 02 55 751 bekannt geworden. Bei dieser Stützwalze, die hinter einem Bodenbearbeitungsgerät angeordnet ist, ist ein zwangsweise angetriebener und drehbar gelagerter Abstreifer, der auf einer Abstreiferwelle befestigt ist, bekannt. Die Abstreiferwelle wird über eine Antriebsvorrichtung zwangsweise von der Schlepperzapfwelle angetrieben. Es hat sich gezeigt, daß sich derartige Abstreifer vor allem unter schwierigsten Bedingungen nicht immer eignen.

Der Erfindung liegt die Aufgabe zugrunde, auf einfachste Weise auch unter schwierigsten Bedingungen eine gute Abstreifarbeit zu erreichen.

Diese Aufgabe wird erfindungssgemäß durch die kennzeichnenden Merkmale des Anspruches 1 gelöst. Infolge dieser Maßnahme arbeitet der Abstreifer, wenn er zeitweise wie ein normaler Abstreifer still steht und so die die Walzen sauber abstreift. Desweiteren wird dadurch, daß der Abstreifer zeitweise zusätzlich bewegt wird, auch unter schwierigsten Bedingungen ein sicheres Abstreifen auch von Teilen, die sich um die Walze festwickeln wollen, erreicht. Es wird also auf einfachste Weise sicher gewährleistet, daß der Abstreifer in jedem Falle immer gut arbeitet und die Walze sauber hält. Um eine kontinuierlich gute Abstreifwirkung und einen ruhigen Lauf des Abstreifers sowie der Stützwalze zu erreichen, ist der Abstreifer zumindest mit zwei sich etwa in radialer Richtung erstreckenden Abstreiferelemente, die sich in Längsrichtung der Stützwalze des annähernd deren gesamte Breite erstreckt, ausgerüstet und darüberhinaus sind die Abstreiferelemente schraubenlinienförmig verdreht angeordnet. Hierbei können je zwei gegenüberliegenden Abstreiferelemente der Abstreiferwelle pro Meter Arbeitsbreite zwischen 180 und 360°, vorzugsweise etwa 240° pro Meter verdreht sein.

In einfacher Weise läßt sich der intermittierende Antrieb des Abstreifers dadurch realisieren, daß auf der Antriebswelle des Abstreifers ein Antriebsrad angeordnet ist, daß an der Stützwalze Antriebsstifte in Abstand zueinander angeordnet sind, und daß die Antriebsstifte das Antriebsrad der Antriebswelle des Abstreifers schubweise, also intermittierend drehen. Hierbei sollte das Antriebsrad auf seiner umlaufenden Außenfläche mit einer elastischen Schicht, vorzugsweise mit einer aufgummierten Außenschicht versehen sein. Hierdurch wird auf einfachste Weise ein sicheres Weiterdrehen des Abstreifers durch die Antriebsstifte, die an der Stützwalze angeordnet sind, erreicht.

Es sollte beachtet werden, daß die Abstreiferwelle mit den Abstreiferelementen derart verdreht ist, daß die Abstreiferwelle selbsthemmend stehen bleibt, d.h. daß sie sich nicht alleine aufgrund der Anlage am Walzenmantel der Antriebswalze dreht. Denn es ist sehr wichtig, daß die Abstreiferwelle, wenn sie nicht von den Antriebselementen der Stützwalze weiter gedreht wird, zumindest kurzzeitig feststeht, damit die Abstreiferelemente während des Stillstandes den Walzenmantel über eine enstsprechend lange Strecke auch abstreifen können.

Es sei an dieser Stelle darauf hingewiesen, daß der erfindungsgemäße Abstreifer bei allen Stützwalzen für Bodenbearbeitungsmaschinen, Rasenmäher, Kehrmaschinen etc. zu verwenden ist.

Weitere Einzelheiten der Erfindung sind den übrigen Unteransprüchen, der Beispielsbeschreibung und den Zeichnungen zu entnehmen. Hierbei zeigen
- Fig. 1: eine erfindungsgemäße Stützwalze, die hinter einem Rasenmäher angeordnet ist, in der Seitenansicht und in Prinzipdarstellung,
- Fig. 2: die Anordnung das Abstreifers an der Bodenwalze in der Ansicht von hinten in vergrößerter Darstellung und
- Fig. 3: die Anordnung des Abstreifers gemäß Fig. 2 in der Seitenansicht.

Die Stützwalze 1 ist hinter dem Rotor 2 eines Rasenmähers 3 angeordnet. Die Stützwalze 1 ist über den Verbindungsarm 4 mit dem Rahmen des Rasenmähers 3 verbunden. Der Verbindungsarm 4 ist gegenüber dem Rahmen des Rasenmähers in der Höhe verstellbar, so daß die Arbeitshöhe des Rotors 2 des Rasenmähers 3 einzustellen ist. An dem Haltearm 4 ist ein weiterer Haltearm 5 zur Lagerung der Abstreiferwelle 6 des Abstreifers 7 angeordnet. Die Stützwalze 1 ist mittels des Lagerzapfens 8 frei drehbar in dem Haltearm 4 gelagert. Die Stützwalze 1 rollt mit ihrem Walzenmantel auf der Bodenoberfläche 9 ab. Auf der einen Stirnseite 10 der Stützwalze 1 sind vier Antriebsstifte 11 angeschweißt. Diese Antriebsstifte 11 sind auf einem Kreisbogen im Abstand zueinander angeordnet.

Die Abstreiferwelle 6 des Abstreifers 7 ist mittels der Lagerzapfen 12 frei drehbar in den Haltearmen 5 gelagert. Die Abstreiferwelle 6 des Abstreifers 7 weist zwei gegenüberliegende Abstreiferelemente 13 auf. Diese Abstreiferelemente 13 erstrecken sich in radialer Richtung. Desweiteren erstrecken sich die Abstreiferelemente 13 sich in Längsrichtung der Stützwalze 1 über zumindest annähernd deren gesamte Breite B. Die Abstreiferelemente 13 sind schraubenlinienfömig verdreht auf der Antriebswelle 6 angeordnet. An dem einen Ende der Abstreiferwelle 6 ist das Antriebsrad 14 angeordnet. Das Antriebsrad 14 ist in Bezug auf die Stützwalze auf der Seite der Abstreiferwelle 6 angeordnet, auf der die Antriebsstifte 11 an der Stützwalze 1 angeordnet sind. Das Antriebsrad 14 ist auf seiner umlaufenden Außenfläche mit der aufgummierten Außenschicht 15 versehen. Diese aufgummierte Außenschicht 15 ist elastisch, damit die Antriebsstifte sich zu einem sicheren Antrieb in die Außensicht 15 etwas eindrücken können.

Die Antriebsstifte 11 und das Antriebsrad 14 sind derart zueinander angeordnet, daß die Antriebsstifte 11 das Antriebsrad 14 und somit die Abstreiferwelle 6 schubweise drehen. Durch die entsprechende Anordnung der Abstreiferstifte 11 im Abstand zueinander wird der Abstreifer 7 intermittierend angetrieben. Hierdurch steht er zeitweise still und wird dann wieder etwas weitergedreht.

Die Abstreiferelemente 13 des Abstreifers 7 sind elastisch ausgebildet und beispielsweise aus Gummi oder Kunststoff hergestellt.

Die zwei gegenüberliegenden Abstreiferelemente 13 sind pro Meter Arbeitsbreite zwischen 160° und 360°, vorzugsweise um etwa 240° pro Meter Arbeitsbreite verdreht. Hierdurch ist die Abstreiferwelle 6 mit den Abstreiferelementen 13 derart verdreht, daß die Abstreiferwelle 6 selbsthemmend still stehend ausgebildet ist, so daß sie sich nicht alleine aufgrund der Anlage am Walzenmantel der Stützwalze dreht. Die Abstreiferwelle 6 dreht sich nur, wenn sie von den Antriebstiften 11 jeweils ein Stück weiter verdreht wird. Die Abstreiferwelle 6 wird also, indem das Antriebsrad 14 über die Antriebsstifte 11 angestoßen wird, nur schubweise, also intermittierend weitergedreht. Die Anlagefläche der Abstreiferelemente 13 am Walzenmantel der Stützwalze 1 reicht nicht aus, die Abstreiferwelle 6 zu drehen. Dieses ist bewußt so gewollt, denn durch den zeitweisen Stillstand und nur des schubweisen Weiterdrehens der Antriebswelle 6 wird eine hervorragende Abstreifwirkung und ein sehr gutes Sauberhalten der Stützwalze 1 erreicht.

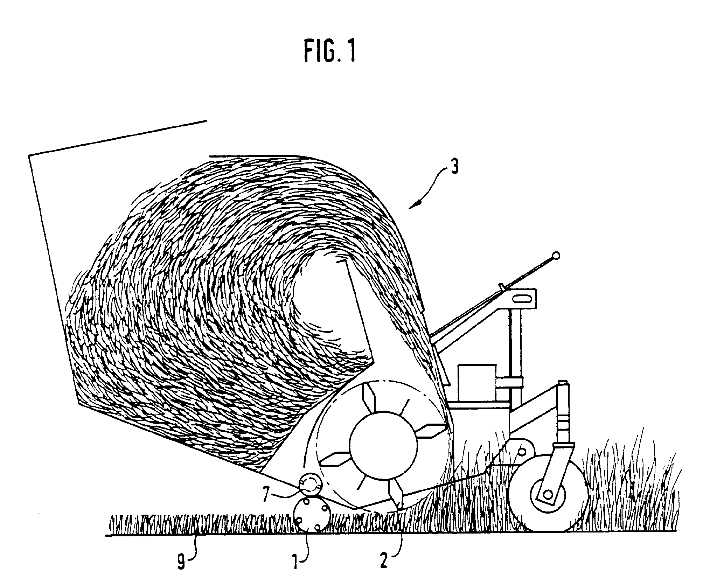

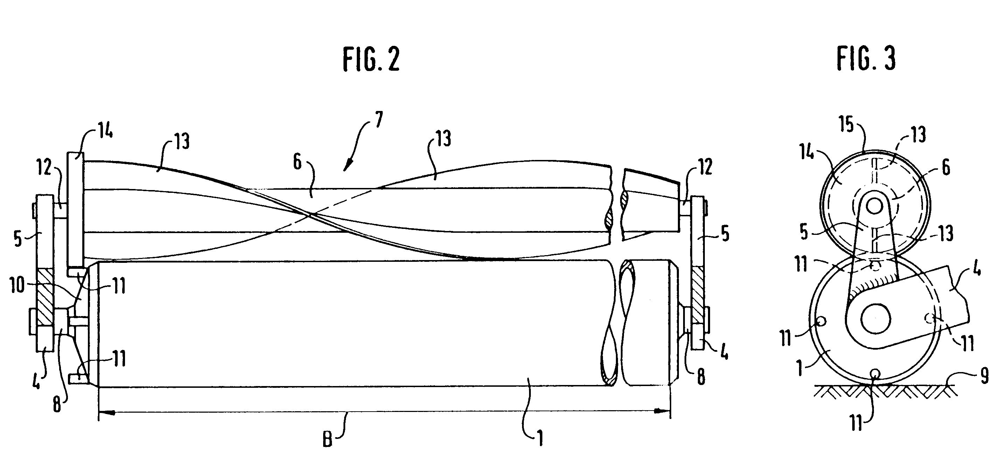

Es sei darauf hingewiesen, daß die in Fig. 1 - 3 dargestellte Position des Abstreifers gegenüber der Stützwalze insbesondere für Rasenmäher eignet. Bei einer Stützwalze für eine Bodenbearbeitungsmaschine zur Saatbettbereitung wird die Abstreiferwelle auf der Rückseite der Stützwalze möglichst nahe der Bodenoberfläche angeordnet.

## Patentansprüche

1. Stützwalze für Bodenbearbeitungsgeräte und/oder Rasenmäher etc, mit einem zwangsweise angetriebenen und drehbar gelagerten Abstreifer (7), welcher zumindest zwei sich etwa in radialer Richtung erstreckende Abstreiferelemente (13), die sich in Längsrichtung der Stützwalze (1) über zumindest annähernd deren gesamte Breite (B) erstrecken, aufweist, dadurch gekennzeichnet, daß die Abstreiferelemente (13) schraubenlinenförmig verdreht angeordnet sind, daß Mittel (14,11) zum intermettierenden Antrieb des Abstreifers (7) vorgesehen sind.

2. Stützwalze nach Anspruch 1, dadurch gekennzeichnet, daß auf der Antriebswelle (6) des Abstreifers (7) ein Antriebsrad (14) angeordnet ist, daß an der Stützwalze (1) Antriebsstifte (11) in Abstand zueinander angeordnet sind, daß die Antriebsstifte (11) das Antriebsrad (14) der Antriebswelle (6) des Abstreifers (7) schubweise drehen,

3. Stützwalze nach einem oder mehreren der vorstehenden Ansprüche, dadurch gekennzeichnet, daß das Antriebsrad (14) auf seiner umlaufenden Außenfläche mit einer elastischen Schicht (15), vorzugsweise mit einer aufgummierten Außenschicht (15) versehen ist.

4. Stützwalze nach einem oder mehreren der vorstehenden Ansprüche, dadurch gekennzeichnet, daß die Abstreifer (7) elastisch ausgebildet sind.

5. Stützwalze nach einem oder mehreren der vorstehenden Ansprüche, dadurch gekennzeichnet, daß bei zwei gegenüberliegenden Abstreiferelementen (13) die Abstreiferwelle (6) pro Meter Arbeitsbreite zwischen 180° und 360°, vorzugsweise etwa 240° verdreht ist.

6. Stützwalze nach einem oder mehereren der vorstehenden Ansprüche, dadurch gekennzeichnet, daß die Abstreiferwelle (6) mit den Abstreiferelementen (13) derart verdreht ist, daß die Abstreiferwelle (6) selbsthemmend ist, d.h., daß sie sich nicht allein aufgrund der Anlage am Walzenmantel der Stützwalze (1) dreht.

## Claims

1. Support roller for ground cultivating implements and/or lawnmowers, etc., including a positively driven and rotatably mounted scraper (7), which has at least two scraper elements (13) extending substantially in the radial direction and, in the longitudinal direction of the support roller (1), said elements extend over at least approximately the entire width (B) of said roller, characterised in that the scraper elements (13) are disposed so as to be helically twisted, and in that means (14, 11) are provided for the intermittent drive of the scraper (7).

2. Support roller according to claim 1, characterised in that a drive wheel (14) is disposed on the drive shaft (6) of the scraper (7), in that drive pins (11) are disposed on the support roller (1) spaced apart from one another, and in that the drive pins (11) gradually rotate the drive wheel (14) of the drive shaft (6) of the scraper (7).

3. Support roller according to one or more of the preceding claims, characterised in that the drive wheel (14) is provided, on its circumferential external face, with a resilient layer (15), preferably with a rubberised external layer (15).

4. Support roller according to one or more of the preceding claims, characterised in that the scrapers (7) are resilient.

5. Support roller according to one or more of the preceding claims, characterised in that, when there are two oppositely situated scraper elements (13), the scraper shaft (6) is rotated between 180° and 360°, preferably at substantially 240°, per working width metre.

6. Support roller according to one or more of the preceding claims, characterised in that the scraper shaft (6), provided with the scraper elements (13), is so twisted that the scraper shaft (6) is self-locking, i.e. that it rotates not just because of its being in abutment with the roller shell of the support roller (1).

## Revendications

1. Rouleau de support pour machine pour le travail du sol et/ou tondeuse à gazon, etc..., comportant un racleur (7) monté à rotation et entraîné de force, qui comporte un moins deux éléments racleurs (13) s'étendant sensiblement dans la direction radiale, et qui occupent pratiquement toute la largeur (B) du rouleau de support (1), suivant la direction longitudinale, rouleau caractérisé en ce que les éléments racleurs (13) sont tournés suivant un tracé hélicoïdal, des moyens (14, 11) étant prévus pour entraîner le racleur (7) de façon intermittente.

2. Rouleau de support selon la revendication 1, caractérisé par une roue d'entraînement (14) prévue sur l'axe d'entraînement (6) du racleur (7), des tiges d'entraînement (11) étant prévues sur le rouleau de support (1), à intervalle les unes des autres, et ces tiges (11) font tourner par à-coup ou poussée la roue d'entraînement (14) de l'axe d'entraînement (6) du racleur (7).

3. Rouleau de support selon une ou plusieurs des revendications précédentes, caractérisé en ce que la roue d'entraînement (14) est munie à sa surface extérieure périphérique, d'une couche élastique (15), de préférence d'une couche extérieure (15) vulcanisée.

4. Rouleau de support selon une ou plusieurs des revendications précédentes, caractérisé en ce que les racleurs (7) sont élastiques.

5. Rouleau de support selon une ou plusieurs des revendications précédentes, caractérisé en ce que pour deux éléments racleurs (13) opposés, l'axe de racleur (6) tourne par mètre de largeur de travail entre 180° et 360°, de préférence de l'ordre de 240°.

6. Rouleau de support selon une ou plusieurs des revendications précédentes, caractérisé en ce que l'axe de racleur (6) est tourné avec les éléments racleurs (13) de façon que l'axe (6) soit auto-bloquant, c'est-à-dire que cet axe ne tourne pas du fait de son seul contact avec l'enveloppe du rouleau de support (1).
